(19) Europäisches Patentamt / European Patent Office / Office européen des brevets

(11) **EP 3 588 305 A1**

(12) **EUROPEAN PATENT APPLICATION**
published in accordance with Art. 153(4) EPC

(43) Date of publication:
**01.01.2020 Bulletin 2020/01**

(21) Application number: **18780487.7**

(22) Date of filing: **04.04.2018**

(51) Int Cl.:
*G06F 12/00* (2006.01)    *G06F 11/20* (2006.01)

(86) International application number:
**PCT/JP2018/014479**

(87) International publication number:
**WO 2018/186453 (11.10.2018 Gazette 2018/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.04.2017 JP 2017076902**

(71) Applicant: **Panasonic Intellectual Property Management Co., Ltd.**
**Osaka-shi, Osaka 540-6207 (JP)**

(72) Inventor: **INOUE Shinji**
**Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(54) **NONVOLATILE MEMORY WITH INCREASED NUMBER OF USABLE TIMES**

(57)    Recording medium (1) includes nonvolatile memory (12) having a storage region used for writing of data, and controller (11) configured to control the writing of data onto the storage region. Controller (11) divides the storage region into a plurality of areas, selects one area among the plurality of areas, and uses only the one area as a data recording region. When a rewriting ratio in the one area reaches a first predetermined value, the controller switches the data recording region from the one area to another area having not yet used among the plurality of areas.

FIG. 2

EP 3 588 305 A1

**Description**

TECHNICAL FIELD

The present disclosure relates to a recording medium including a nonvolatile memory.

BACKGROUND ART

PTL 1 discloses a storage device including a nonvolatile memory, and a controller configured to control an access region in the nonvolatile memory based on management information on the nonvolatile memory. Based on a plurality of pieces of management information, the storage device divides and manages a storage region in the nonvolatile memory. In this manner, whether each of the pieces of management information is valid or invalid can be promptly determined.

Citation List

Patent Literature

PTL 1: Japanese Patent No. 4301301

SUMMARY OF THE INVENTION

Technical problem

The present disclosure provides a recording medium capable of increasing a number of usable times of a nonvolatile memory.

Solution to problem

A recording medium according to the present disclosure includes a nonvolatile memory having a storage region used for writing of data, and a controller configured to control the writing of data onto the storage region. The controller divides the storage region into a plurality of areas, selects one area among the plurality of areas, and uses only the one area as a data recording region. When a rewriting ratio in the one area reaches a first predetermined value, the controller switches the data recording region from the one are to another area having not yet used among the plurality of areas.

Advantageous effect of invention

The recording medium according to the present disclosure can increase a number of usable times of the nonvolatile memory.

BRIEF DESCRIPTION OF DRAWINGS

FIG. 1 is a block diagram illustrating a configuration of an information recording system according to an aspect of the present disclosure.
FIG. 2 is a view illustrating an example of how a storage region in a recording medium is divided.
FIG. 3 is a view illustrating an example of management information.
FIG. 4 is a view illustrating a specific example of the storage region and the management information.
FIG. 5 is a flowchart illustrating operation of the recording medium according to the aspect of the present disclosure.
FIG. 6 is a flowchart illustrating details of how remaining data in a previous page is moved.
FIG. 7 is a view illustrating a specific example of how data is written.
FIG. 8 is a flowchart illustrating operation of a host according to the aspect of the present disclosure.

DESCRIPTION OF EMBODIMENTS

Hereinafter, embodiments will be described in detail with reference to the drawings as appropriate. However, detailed description more than necessary may be omitted. For example, a detailed description of a well-known matter or a duplicated description of substantially the same configuration is omitted in some cases. This is to avoid unnecessary redundancy in the following description and to facilitate understanding by those skilled in the art.

Note that the inventors of the present disclosure provide the accompanying drawings and the following description in order to allow those skilled in the art to fully understand the present disclosure, and do not intend to limit the subject matter as described in the appended claims.

(Circumstances that have led to the present disclosure)

In each of storage elements constituting a nonvolatile memory such as a NAND-type flash memory, a number of times of rewriting is limited. A recording medium including a nonvolatile memory is normally configured to disallow, as much as possible, data to be unevenly written onto storage elements. That is, destinations of data to be written are dispersed to level numbers of times of writing in the plurality of storage elements constituting the nonvolatile memory.

A large-capacity, nonvolatile memory may however face difficulty in fully leveling numbers of times of rewriting onto storage elements. When the numbers of times of rewriting have each reached an upper limit in some of the storage elements, whereas the numbers of times of rewriting have not yet each reached the upper limit in others of the storage elements, writing of data onto the nonvolatile memory becomes impossible in some cases. The present disclosure provides a recording medium capable of increasing a number of usable times of a nonvolatile memory.

(First exemplary embodiment)

1. Configuration

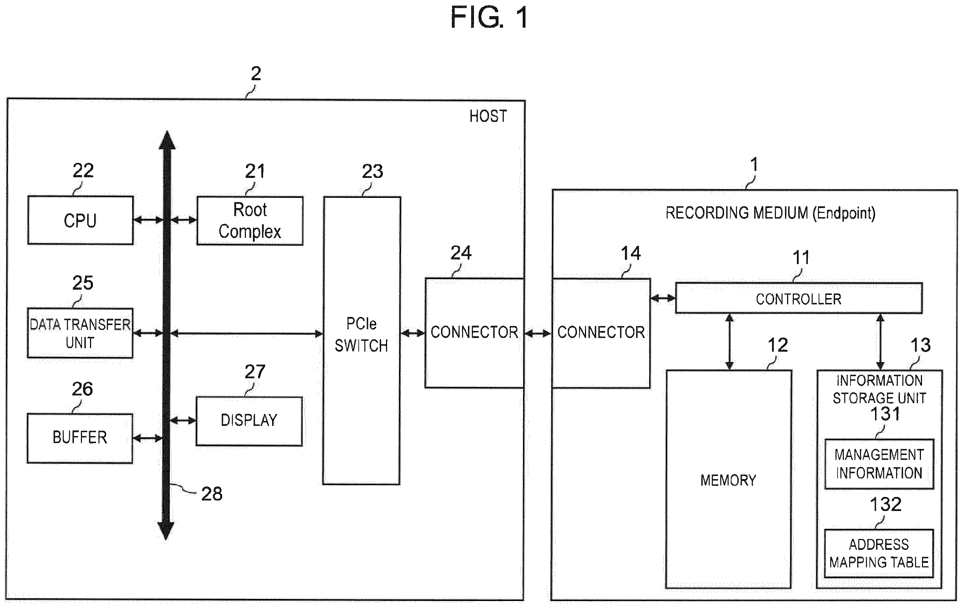

FIG. 1 discloses an information recording system according to an aspect of the present disclosure.

The information recording system includes recording medium 1 configured to store data, and host 2 configured to write and read data onto and from recording medium 1.

Recording medium 1 is, for example, a secure digital (SD) memory card or a solid state drive (SSD).

Host 2 is, for example, a personal computer, a digital camera, or a smartphone.

In the present exemplary embodiment, recording medium 1 and host 2 are coupled with each other with a bus conforming to a peripheral component interconnect express (PCI Express or PCIe) standard. Recording medium 1 and host 2 may be however coupled with each other with a bus conforming to another standard than the PCI Express standard.

Recording medium 1 includes controller 11, memory 12, information storage unit 13, and connector 14.

Based on a command received from host 2 via connector 14, controller 11 performs processing such as reading and writing of data from and onto memory 12. Controller 11 can be achieved with a semiconductor element, for example, and can include, for example, a microcomputer, a central processing unit (CPU), a microprocessor unit (MPU), a digital signal processor (DSP), a field programmable gate array (FPGA), or an application specific integrated circuit (ASIC).

In the present exemplary embodiment, memory 12 is a NAND-type flash memory. Memory 12 may however be another nonvolatile memory than the NAND-type flash memory. Memory 12 has a storage region used to record data.

Information storage unit 13 is recorded with management information 131 and address mapping table 132. Management information 131 is information used to manage a status of use of the storage region in memory 12. Address mapping table 132 is a table associating logical addresses specified by host 2 with physical addresses in memory 12. Information storage unit 13 can be achieved with, for example, one of or a combination of a random access memory (RAM), a dynamic random access memory (DRAM), a ferroelectric memory, and a flash memory.

Connector 14 is a member configured to be electrically coupled to host 2, and is configured to conform to the PCI Express standard.

Host 2 includes Root Complex 21, CPU 22, PCIe switch 23, connector 24, data transfer unit 25, buffer 26, and display 27. Root Complex 21 and PCIe switch 23 are configured to perform communications conforming to the PCI Express standard. Root Complex 21, CPU 22, PCIe switch 23, data transfer unit 25, buffer 26, and display 27 are mutually coupled with bus 28.

CPU 22 is configured to wholly control host 2. Host 2 has a slot (not illustrated) to be inserted with recording medium 1. Connector 24 is provided in the slot. Connector 24 is a member configured to be electrically coupled to recording medium 1, and is configured to conform to the PCI Express standard. Data transfer unit 25 follows control by CPU 22 to send commands and data to recording medium 1. Display 27 is, for example, a liquid crystal panel or an organic electroluminescence (EL) panel.

Upon coupling of recording medium 1 to host 2 via connector 14 and connector 24, commands and data are exchanged between recording medium 1 and host 2.

In the information recording system according to the present exemplary embodiment, the storage region in memory 12 of recording medium 1 is wholly divided into a plurality of areas each having a predetermined size (hereinafter referred to as "pages"), and only one page in the plurality of pages being divided is allocated as a region onto which data can be recorded. That is, only a part of the storage region in memory 12 is used as a data recording region. When a rewriting ratio exceeds a predetermined value in the one page allocated as the data recording region, writing of data onto the page is prohibited, and a next page is allocated as the data recording region. Each time the rewriting ratio exceeds the predetermined value in one of the pages, the data recording region is then sequentially switched to another one of the pages. In setting of the data recording region, as described above, a memory capacity to be temporarily utilized reduces. However, a number of times of rewriting onto each region of the pages can be increased.

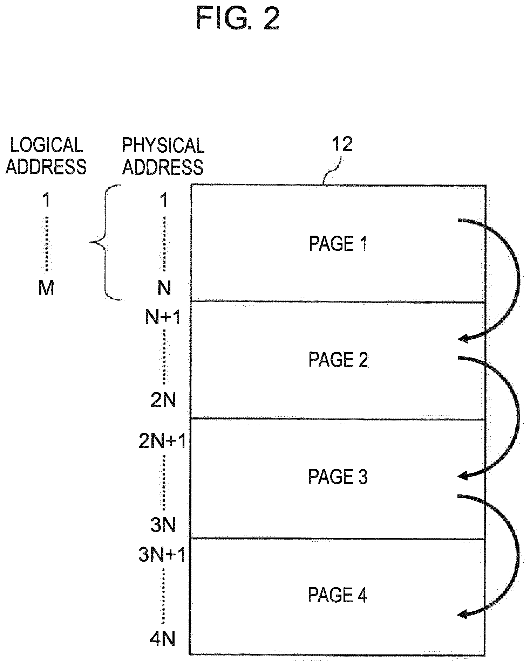

FIG. 2 is a view schematically illustrating how the storage region in memory 12 is divided. The storage region is divided into the plurality of pages each having a uniform size. A number of pages (number of divisions) can be set as desired. The number of pages may be determined beforehand, or may be determined by controller 11 based on an instruction from a user. In the present exemplary embodiment, as an example, the storage region is divided into four pages. For example, when the whole storage region has a capacity of 100 terabytes (TB), each of the pages has a capacity of 25 TB.

Controller 11 of recording medium 1 uses the pages one by one in order as a region used to record data. Specifically, controller 11 first uses page 1 to write data sent from the host onto page 1. At this time, pages 2 to 4 are not used for recording of data. One of logical addresses (1 to M) is specified by host 2, and is associated by address mapping table 132 to one of physical addresses (1 to N) in page 1. In address mapping table 132, associations among logical addresses 1 to M and physical addresses 1 to N are changed through rewriting of data, for example.

When the rewriting ratio in page 1 is more than or equal to a threshold value, controller 11 switches the data recording region from page 1 to page 2. In the present exemplary embodiment, the "rewriting ratio (writing ratio)" in a page is defined as a ratio of a current, actual number of times of writing onto the page with respect to an allowable number of times of writing onto the whole page being set. Specifically, the rewriting ratio is calculated with an expression described below.

$$\text{Rewriting ratio} = \text{Current number of times of writing/Allowable number of times of writing}$$

The threshold value is set to a value closer to 100% such as 95%. Furthermore, when the rewriting ratio in page 2 exceeds the threshold value (e.g., 95%), the data recording region is switched from page 2 to page 3. At this time, pages 1, 3, and 4 are not used for recording of data. As described above, in the present exemplary embodiment, pages 1 to 4 are used one by one in order as the data recording region.

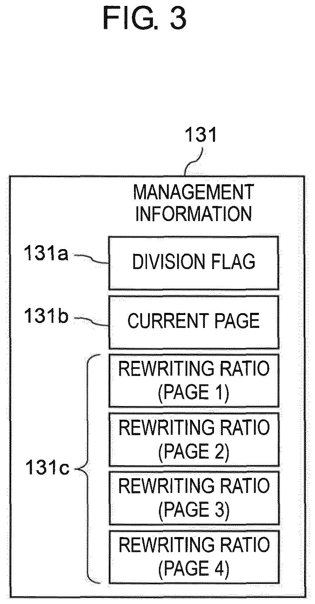

FIG. 3 is a view illustrating an example of management information 131 used to manage the data recording region, as described above. Management information 131 includes division flag 131a indicative of that the storage region in memory 12 is divided into and used as the plurality of pages, current-page information 131b indicative of a page being currently used among the pages, and rewriting ratio information 131c indicative of the current rewriting ratios in the pages.

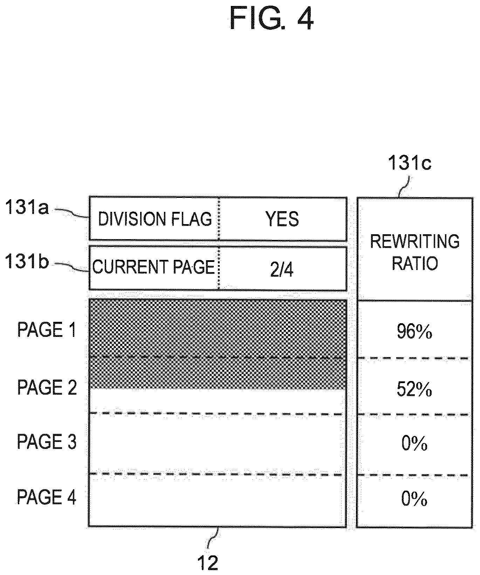

FIG. 4 is a view illustrating a specific example of management information 131 on a status of use of the pages. In the example in FIG. 4, the storage region in memory 12 is divided into the four pages. Division flag 131a is therefore set with "YES" indicative of that the storage region has been divided. In FIG. 4, hatching applied across regions of pages 1, 2 schematically represents the rewriting ratio in each of the pages. The rewriting ratio in page 1 is almost 100%. The rewriting ratio in page 2 is still approximately half of its capacity. At this time, the page being currently used is "page 2". Current-page information 131b is therefore set with "2/4" (i.e., second page). The rewriting ratio in each of the pages is calculated in accordance with "Current number of times of writing/Allowable number of times of writing". In rewriting ratio information 131c, the rewriting ratios in pages 1 to 4 are respectively set with 96%, 52%, 0%, and 0%.

2. Operation

2.1 Whole operation of recording medium

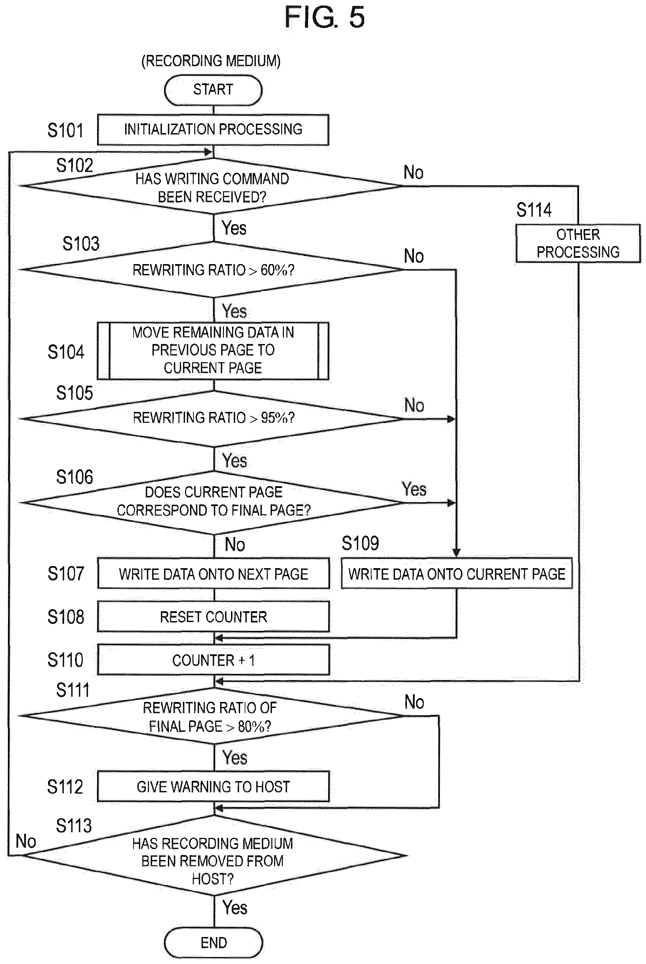

FIG. 5 illustrates control by controller 11 of recording medium 1. In the present exemplary embodiment, here describes a case, for convenience of description, where a single writing command instructs writing of data at a predetermined amount (fixed size).

Upon coupling of recording medium 1 to host 2, controller 11 of recording medium 1 performs initialization processing (S101). In the initialization processing, for example, controller 11 sends to host 2 division flag 131a, a size of a page, a whole size of the storage region, and parameters indicative of capability of recording medium 1.

Upon completion of the initialization processing, controller 11 waits for a command from host 2. Upon reception of the command from host 2, controller 11 determines whether the command corresponds to the writing command (S102). The writing command sent from host 2 includes a logical address indicative of a writing start position, and data to be written.

Upon reception of the writing command from host 2, controller 11 determines, by referring to management information 131, whether the rewriting ratio in the page being currently used is exceeding the predetermined value (in the present exemplary embodiment, 60%) (S103). When the rewriting ratio in the page being currently used is not exceeding 60%, controller 11 writes, onto the page being currently used, data for which writing is instructed through the writing command in step S102 (S109).

On the other hand, when the rewriting ratio in the page being currently used is exceeding 60%, controller 11 moves data that has not yet been rewritten in the page previously used to the page being currently used (S104). A reason is that, when there is data yet remained unmoved from a page previously used even though the rewriting ratio in a page being currently used is exceeding 60%, the data should be almost forcibly moved. Details of step S104 will be described later.

After that, controller 11 determines whether the rewriting ratio in the page being currently used is exceeding a threshold value for page switching (in the present exemplary embodiment, 95%) (S105). When the rewriting ratio in the page being currently used is not exceeding 95%, controller 11 writes, onto the page being currently used, the data for which writing is instructed through the writing command in step S102 (S109).

On the other hand, when the rewriting ratio in the page being currently used is exceeding 95%, controller 11 determines whether the current page is a final page based on management information 131 (S106). As no next page exists when the current page is the final page, even when the rewriting ratio is exceeding 95%, controller 11 writes, onto the final page, the data for which writing is instructed through the writing command in step S102 (S109).

When the rewriting ratio in the page being currently used is exceeding 95%, and the current page is not the final page, controller 11 writes the data for which writing is instructed through the writing command in step S102 onto a next page (page being unused) (S107). Upon completion of writing of the data onto the next page, controller 11 resets a counter indicative of the number of times of writing in the page being currently used to zero (S108). Controller 11 further updates current-page information 131b in management information 131.

Upon completion of writing of the data in step S107 or S109, controller 11 increases a counter value by one (S110). Then, the number of times of writing in the page being currently used, which is indicated by the counter, increases by one. At this time, controller 11 uses "Counter value/Allowable number of times of writing" to calculate the rewriting ratio in the page being currently used, and updates rewriting ratio information 131c in management information 131.

Upon reception of a command for other than writing (No in S102), controller 11 executes processing corresponding to the command (S114). For example, upon reception of a reading command from host 2, controller 11 reads data from a specified region in the storage region, and sends the data to host 2.

Upon completion of the processing corresponding to the command from host 2 (after step S110 or S114), controller 11 determines, by referring to management information 131, whether the rewriting ratio in the final page in memory 12 is exceeding a threshold value for warning (in the present exemplary embodiment, 80%) (S111). When the rewriting ratio in the final page is exceeding 80%, controller 11 gives to host 2 a warning indicative of increase of the rewriting ratio in the final page (S112).

Controller 11 then determines whether recording medium 1 has been removed from host 2 (S113). When not removed, controller 11 returns to step S102 to wait for a next command from host 2. Upon removal of recording medium 1 from host 2, the processing illustrated in FIG. 5 ends.

2.2 Operation of moving remaining data in recording medium

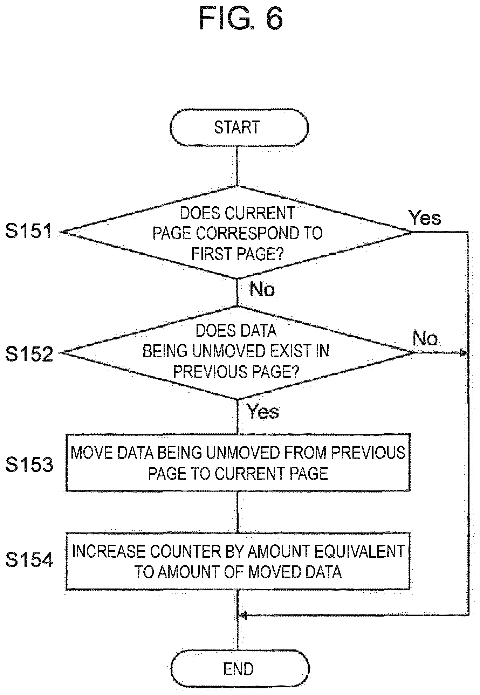

The processing in step S104 described above will be described in detail with reference to FIG. 6. FIG. 6 is a flowchart illustrating in detail the processing (step S104 in FIG. 5) of moving, to a page being currently used, data in a page previously used, i.e., data that has not yet been rewritten.

Controller 11 determines whether the page being currently used is the first page (S151).

When the page being currently used is not the first page (page 1), controller 11 determines whether the page previously used still contains the data that has not yet been rewritten, i.e., the data being unmoved to the page being currently used (S152). When the page previously used still contains the data being unmoved, controller 11 moves the data to the page being currently used (S153). After that, controller 11 increases the counter in accordance with the data being moved (S154).

On the other hand, when the page being currently used is the first page (page 1) (Yes in S151), or when all of the data in the page previously used is moved to the page being currently used (Yes in S152), the processing illustrated in FIG. 6 ends because there is no data required to be moved.

In the example described above, an amount of data to be written through the single writing command corresponds to the predetermined amount of data (fixed size). An amount of data to be written through the single writing command may however be variable. To increase the counter in that case, an increment of the counter may be changed in accordance with an amount of data to be written through the single writing command. That is, when data is written at a total amount corresponding to an amount of "predetermined size x $\alpha$", the increment of the counter is set to "$\alpha$". For example, when data is written at an amount of "predetermined size x 5", the increment of the counter is set to "+5".

2.3 Specific example of writing of data

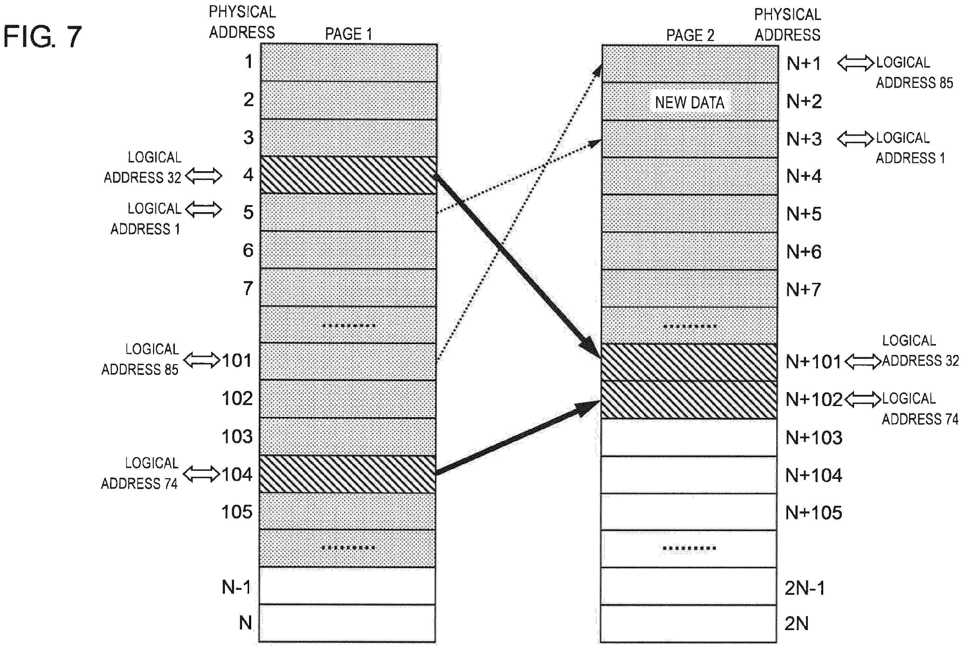

A specific example of writing of data will be described with reference to FIG. 7. FIG. 7 illustrates a state where data is written in page 2.

For example, upon reception of the writing command from host 2 in a state where the rewriting ratio in page 1 being currently used is exceeding 95%, the page is switched, and data is written onto the next page (page 2) (steps S105, S107 in FIG. 5). When data is to be written onto page 2, controller 11 first identifies, based on a logical address specified in the writing command, a physical address by referring to address mapping table 132. For example, when the writing command instructs rewriting of data at a logical address of "85", controller 11 identifies, by referring to address mapping table 132, a physical address of "101" corresponding to the logical address of "85", and reads data written at the physical address of "101". Controller 11 then changes, based on the writing command, some of the data being read, and writes the changed some of the data at a position corresponding to a physical address of "N + 1" in the next page (page 2). After that, controller 11 updates address mapping table 132 to allow the logical address to be associated with the physical address in page 2. As described above, in a case where the page being used is the switched page (e.g., page 2), upon reception of the writing command, data at a physical address in the previous page (e.g., page 1), which is associated with a logical address specified in the command, is changed, and the changed data is written onto the page being currently used (e.g., page 2).

If writing of data onto the page being currently used in accordance with the writing command is repeated, such a situation occurs that the data exists across the page previously used and the page being currently used. In the present exemplary embodiment, however, when the rewriting ratio in the page being currently used exceeds 60% (step S103 in FIG. 5), such processing is performed that moves remaining data in the page previously used to the page being currently used (step S104 in FIG. 5). Determination of whether there is data being unmoved to the page being currently used, but remaining in the page previously used can be performed by referring to address mapping table 132.

For example, when address mapping table 132 has logical addresses associated with physical addresses of "4", "104" in the region of the page previously used (page 1), controller 11 moves data written at the physical addresses of "4", "104" to the page being currently used (page 2). In address mapping table 132, logical addresses of "32", "74" of the data being moved are respectively associated with physical addresses of "N + 101", "N + 102" in the destinations. The remaining data in the page previously used (page 1) is all thus moved to the page being currently used (page 2).

2.4 Host's warning operation

As described above, upon increase of the rewriting ratio in recording medium 1, recording medium 1 gives to host 2 a warning indicative of increase of the rewriting ratio in recording medium 1 (step S112 in FIG. 5). Upon reception of the warning from recording medium 1, host 2 performs a warning operation.

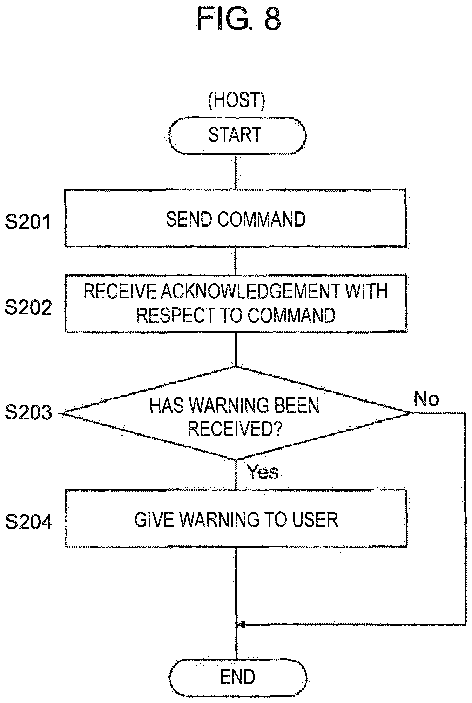

FIG. 8 is a flowchart of the warning operation performed by CPU 22 of host 2. CPU 22 of host 2 sends to recording medium 1 a command based on an instruction from a user, for example (S201). The command is an order for instructing recording medium 1 to write data, to read data, to delete data, or to perform other processing.

CPU 22 receives from recording medium 1 an acknowledgement with respect to the command (S202). The acknowledgement sent from the recording medium contains a warning indicative of increase of the rewriting ratio in the final page, a notification indicative of completion of writing data, a notification indicative of that writing of data is not allowed, or data being read, for example.

CPU 22 determines whether the received acknowledgement is a warning indicative of increase of the rewriting ratio in the final page (S203). That is, CPU 22 determines whether a warning is received. Upon reception of the warning from recording medium 1, CPU 22 gives the warning to the user. For example, CPU 22 causes display 27 to display the rewriting ratio in the storage region in recording medium 1 and a message urging replacement of the recording medium to new recording medium 1. The user can recognize increase of the rewriting ratio in recording medium 1. Before recording medium 1 can no longer be used, i.e., before neither reading nor writing can be performed, the user can replace recording medium 1 with a new one.

3. Effect and others

Recording medium 1 according to the present disclosure includes nonvolatile memory 12 having the storage region used for writing of data, and controller 11 configured to control writing of data onto the storage region. Controller 11 divides the storage region into a plurality of pages (areas), selects one page from among the plurality of pages, uses only the selected page as a data recording region, and, when a rewriting ratio in the selected page reaches a first predetermined value (e.g., 95%), switches the region to a region to be used as the data recording region in another page being unused among the plurality of pages. The rewriting ratio represents a ratio of an actual number of times of writing with respect to an allowable number of times of writing. The page can thus be continuously used immediately before the page can no longer be used, thereby significantly increasing a number of usable times of whole memory 12. By dividing the storage region into a plurality of pages, a calculation of a rewriting ratio based on a number of times of writing improves in accuracy.

Memory 12 stores division flag 131a indicative of that the storage region has been divided into the plurality of pages. Even when a capacity in a rewritable region (data recording region) in memory 12 is significantly smaller, compared with a size of memory 12 being actually mounted, host 2 can recognize, by referring to division flag 131a, that recording medium 1 is available. Data can thus be normally read and written.

Memory 12 stores current-page information 131b indicative of a page being used. Memory 12 further stores rewriting ratio information 131c indicative of the rewriting ratios in the pages. This allows controller 11 itself to know a status of use of memory 12, as well as to give the status of use of memory 12 from recording medium 1 to host 2.

When the rewriting ratio in the page being currently used reaches the predetermined value (e.g., 60%), controller 11 moves data being unmoved to the page being currently used in data written in the page previously used to the page being currently used. This prevents data from continuously being present across the plurality of pages, thereby increasing a speed of reading and writing of data. For example, if some of data is recorded across some of the plurality of page, the data might be recorded across all of the four pages. As data is distributed wider, a number of times the whole recording region should be checked might increase, thereby generally lowering capability of reading and writing. The present exemplary embodiment has taken into account the problem. When the rewriting ratio reaches the predetermined value (e.g., 60%) after writing onto a new page is once started, data is moved to a new page. Even though, upon start of writing onto a new page, data is allowed to move across pages during a certain initial period, accessing can be completed only within the new page as promptly and smoothly as possible from a certain point (e.g., when the rewriting ratio reaches 60%).

When the rewriting ratio in the last page being selected reaches a predetermined value (e.g., 80%) after all of the plurality of pages have been each sequentially selected as the data recording region, controller 11 gives a warning to host 2. Before recording medium 1 can no longer be used, this allows host 2 to give a warning to a user.

(Other exemplary embodiments)

As described above, the first exemplary embodiment has been described as an example of the technique disclosed in the present application. However, the technique of the present disclosure is not limited to the first exemplary embodiment, and also applicable to other exemplary embodiments that undergo some modifications, replacements, additions, and omissions, for example, as appropriate. A new exemplary embodiment can also be provided by combining the respective configuration elements described in the above first exemplary embodiment. Thus, other exemplary embodiments are described as examples below.

The predetermined values and the threshold values used in the exemplary embodiment described above as the references for determination in steps S103, S105, and S111 are not limited to the values described above (60%, 95%, and 80%), but can be appropriately set. That is, the predetermined values and the threshold values described above may be appropriately set in accordance with capability of a NAND used as a base element, a whole capacity, and application (use case). The predetermined values and the threshold values described above are not necessarily fixed values, but may be dynamically changed in accordance with a state of a recording medium. The predetermined values and the threshold values described above may be set by host 2.

The exemplary embodiment has described that, upon reception of a writing command, and when the rewriting ratio in a current page is exceeding 60% in steps S102 to 104 in FIG. 5, remaining data in a page previously used is moved to a page being currently used. However, upon reception of a command (e.g., reading command) other than the writing command, and when the rewriting ratio in a current page is exceeding 60%, remaining data in a page previously used may be moved to a page being currently used.

In the exemplary embodiment described above, upon reception of the writing command, and when the rewriting ratio in the current page is exceeding 95% in steps S105 to 107 in FIG. 5, a page to be used is changed to a next page. However, upon reception of the reading command, and when the rewriting ratio in the current page is exceeding 95%, a page to be use may be changed to a next page. In this case, data being read is rewritten onto the next page.

The exemplary embodiment has described the case where rewriting ratio information 131c is indicative of the rewriting ratios in the pages. Based on the rewriting ratios, the processing of writing of data, illustrated in FIG. 5, is performed. However, instead of the rewriting ratios in the pages, rewriting ratio information 131c may be indicative of a current number of times of writing (counter values) in the pages. Based on the number of times of writing (counter values), the processing of writing of data, illustrated in FIG. 5, may be performed.

The exemplary embodiment has described the example where the storage region has been divided into the four pages. However, a user may be able to select how many the storage region is to be divided. For example, recording medium 1 stores information indicative of an available number of divisions. In initial use of recording medium 1, recording medium 1 may send to host 2 information indicative of the available number of divisions. Controller 11 may then divide the storage region based on a number of divisions designated by a user via host 2. Specifically, when the storage region has a capacity of 100 TB, one of "10 TB $\times$ 10 pages", "25 TB $\times$ 4 pages", "50 TB $\times$ 2 pages", and "100 TB $\times$ 1 page (not divided)" may be selected.

The exemplary embodiment has described the case where management information 131 is stored in recording medium 1 only. However, both of recording medium 1 and host 2 may store management information 131. In this case, for example, host 2 may read management information 131 from recording medium 1 in the initialization processing in step S101 in FIG. 5. Host 2 may store management information 131 being read in buffer 26, or in another built-in storage (e.g., a hard disk or a flash memory). Furthermore, the acknowledgement with respect to the command in step S202 in FIG. 8 may contain management information 131 being updated. CPU 22 of host 2 may determine whether the rewriting ratio in the final page is exceeding 80% by referring to management information 131 to give a warning to a user.

In the exemplary embodiment described above, controller 11 of recording medium 1 has used pages 1 to 4 one by one in order. However, pages may be used in desired order. Controller 11 may select one of a plurality of pages, may use the page as the data recording region, and may use another page being unused when the rewriting ratio in the selected page is approaching 100% (e.g., is exceeding 95%).

In the exemplary embodiment described above, information storage unit 13 is provided separately from memory 12. However, information storage unit 13 and memory 12 may be an integrated nonvolatile memory. In this case, recording medium 1 includes a RAM (not illustrated) serving as a work region. In the initialization processing (S101 in FIG. 5), management information 131 and address mapping table 132 are read from information storage unit 13 and loaded to the RAM. Each time the steps (S102 to S114) illustrated in FIG. 5 are executed, management information 131 loaded on the RAM may be used (referred and updated) thereafter.

The recording medium and the host according to the present disclosure can be achieved with hardware resources such as a processor and a memory with cooperation of a program.

As described above, the exemplary embodiments have been described as examples of the technique of the present disclosure. For this purpose, the accompanying drawings and the detailed description have been provided. The components illustrated in the accompanying drawings and described in the detailed description may include components essential for solving the problems, as well as components that are not essential for solving the problems but required to exemplify the above techniques. Therefore, it should not be immediately construed that these components that are not essential are essential just because these components that are not essential are described in the accompanying drawings and the detailed description.

Each exemplary embodiment described above is provided to exemplify the technique according to the present disclosure. Therefore, it is possible to make various changes, replacements, additions, omissions, and the like within the scope of the claims and equivalents thereof.

INDUSTRIAL APPLICABILITY

According to the present disclosure, a number of usable times of nonvolatile memory in the recording medium can be increased, whereby the present disclosure is useful in a memory card including a large-capacity, nonvolatile memory.

REFERENCE MARKS IN THE DRAWINGS

1: recording medium
11: controller
12: memory
13: information storage unit
14: connector
21: Root Complex
22: CPU
23: PCIe switch
24: connector
25: data transfer unit
26: buffer
27: display

28:      bus
131:     management information
131a:    division flag
131b:    current-page information
131c:    rewriting ratio information
132:     address mapping table

**Claims**

1. A recording medium comprising:

    a nonvolatile memory having a storage region used for writing of data; and
    a controller configured to control the writing of data onto the storage region,
    wherein the controller

        divides the storage region into a plurality of areas,
        selects one area among the plurality of areas, and
        uses only the one area as a data recording region, and

    when a rewriting ratio in the one area reaches a first predetermined value, the controller switches the data recording region from the one area to another area having not yet used among the plurality of areas.

2. The recording medium according to claim 1, wherein the rewriting ratio represents a ratio of an actual number of times of writing with respect to an allowable number of times of writing.

3. The recording medium according to claim 1, wherein the nonvolatile memory stores information indicative of that the storage region is divided into the plurality of areas.

4. The recording medium according to claim 1, wherein the nonvolatile memory stores information indicative of the one area being used.

5. The recording medium according to claim 1, wherein the nonvolatile memory stores information indicative of a rewriting ratio in each of the plurality of areas.

6. The recording medium according to claim 1, wherein when a rewriting ratio in an area being currently used among the plurality of areas reaches a second predetermined value smaller than the first predetermined value, the controller moves data into the area being currently used, the data being written onto an area previously used among the plurality of areas and being unmoved to the area being currently used.

7. The recording medium according to claim 1,
wherein the controller controls the nonvolatile memory based on a command sent from a host, and
after all of the plurality of areas have been each sequentially selected as the data recording region, when a rewriting ratio in a last-selected area among the plurality of areas reaches a third predetermined value, the controller gives a warning to the host.

8. The recording medium according to claim 1, wherein the nonvolatile memory is a NAND-type flash memory.

9. The recording medium according to claim 1, wherein the controller divides the storage region into the plurality of areas in accordance with a number of divisions designated by a user.

**FIG. 1**

RECORDING MEDIUM (Endpoint) 1

- CONTROLLER 11
- INFORMATION STORAGE UNIT 13
  - MANAGEMENT INFORMATION 131
  - ADDRESS MAPPING TABLE 132
- MEMORY 12
- CONNECTOR 14

HOST 2

- CONNECTOR 24
- PCIe SWITCH 23
- Root Complex 21
- CPU 22
- DATA TRANSFER UNIT 25
- BUFFER 26
- DISPLAY 27
- 28

# FIG. 2

LOGICAL ADDRESS
PHYSICAL ADDRESS
12

1
1
PAGE 1
M
N

N+1
PAGE 2
2N

2N+1
PAGE 3
3N

3N+1
PAGE 4
4N

# FIG. 3

131

```
                    MANAGEMENT
                    INFORMATION

131a ──┐        ┌──────────────────┐
        └──────▶│   DIVISION FLAG   │
                └──────────────────┘

131b ──┐        ┌──────────────────┐
        └──────▶│   CURRENT PAGE    │
                └──────────────────┘

                ┌──────────────────┐
                │  REWRITING RATIO  │
                │     (PAGE 1)      │
                ├──────────────────┤
                │  REWRITING RATIO  │
                │     (PAGE 2)      │
131c ──┤        ├──────────────────┤
                │  REWRITING RATIO  │
                │     (PAGE 3)      │
                ├──────────────────┤
                │  REWRITING RATIO  │
                │     (PAGE 4)      │
                └──────────────────┘
```

# FIG. 4

| 131a | DIVISION FLAG | YES |
|------|---------------|-----|
| 131b | CURRENT PAGE | 2/4 |

131c

| | REWRITING RATIO |
|--|-----------------|
| PAGE 1 | 96% |
| PAGE 2 | 52% |
| PAGE 3 | 0% |
| PAGE 4 | 0% |

12

# FIG. 5

(RECORDING MEDIUM)

START

S101 — INITIALIZATION PROCESSING

S102 — HAS WRITING COMMAND BEEN RECEIVED? — No

Yes

S114 — OTHER PROCESSING

S103 — REWRITING RATIO > 60%? — No

Yes

S104 — MOVE REMAINING DATA IN PREVIOUS PAGE TO CURRENT PAGE

S105 — REWRITING RATIO > 95%? — No

Yes

S106 — DOES CURRENT PAGE CORRESPOND TO FINAL PAGE? — Yes

No

S107 — WRITE DATA ONTO NEXT PAGE

S109 — WRITE DATA ONTO CURRENT PAGE

S108 — RESET COUNTER

S110 — COUNTER + 1

S111 — REWRITING RATIO OF FINAL PAGE > 80%? — No

Yes

S112 — GIVE WARNING TO HOST

S113 — HAS RECORDING MEDIUM BEEN REMOVED FROM HOST? — No

Yes

END

# FIG. 6

```
                    ┌──────────────┐
                    │    START     │
                    └──────┬───────┘
                           │
              ╱────────────┴────────────╲
           ╱       DOES CURRENT            ╲        Yes
  S151   ╱      PAGE CORRESPOND TO           ╲──────────┐
          ╲         FIRST PAGE?             ╱           │
           ╲──────────────┬────────────────╱            │
                          │ No                          │
              ╱───────────┴──────────────╲              │
           ╱        DOES DATA              ╲     No      │
  S152   ╱     BEING UNMOVED EXIST IN        ╲─────────► │
          ╲       PREVIOUS PAGE?            ╱            │
           ╲─────────────┬─────────────────╱            │
                         │ Yes                          │
      ┌──────────────────┴───────────────────────┐      │
  S153│ MOVE DATA BEING UNMOVED FROM PREVIOUS     │      │
      │         PAGE TO CURRENT PAGE              │      │
      └──────────────────┬───────────────────────┘      │
                         │                               │
      ┌──────────────────┴───────────────────────┐      │
  S154│ INCREASE COUNTER BY AMOUNT EQUIVALENT     │      │
      │        TO AMOUNT OF MOVED DATA            │      │
      └──────────────────┬───────────────────────┘      │
                         │◄──────────────────────────────┘
                    ┌────┴─────────┐
                    │     END      │
                    └──────────────┘
```

# FIG. 7

PHYSICAL ADDRESS    PAGE 1

PAGE 2    PHYSICAL ADDRESS

| Page 1 Physical Address | Page 2 Physical Address |
|---|---|
| 1 | N+1 ⟺ LOGICAL ADDRESS 85 |
| 2 | N+2 (NEW DATA) |
| 3 | N+3 ⟺ LOGICAL ADDRESS 1 |
| LOGICAL ADDRESS 32 ⟺ 4 | N+4 |
| LOGICAL ADDRESS 1 ⟺ 5 | N+5 |
| 6 | N+6 |
| 7 | N+7 |
| LOGICAL ADDRESS 85 ⟺ 101 | N+101 ⟺ LOGICAL ADDRESS 32 |
| 102 | N+102 ⟺ LOGICAL ADDRESS 74 |
| 103 | N+103 |
| LOGICAL ADDRESS 74 ⟺ 104 | N+104 |
| 105 | N+105 |
| N−1 | 2N−1 |
| N | 2N |

EP 3 588 305 A1

# FIG. 8

(HOST)

START

S201 | SEND COMMAND

S202 | RECEIVE ACKNOWLEDGEMENT WITH RESPECT TO COMMAND

S203 | HAS WARNING BEEN RECEIVED? — No

Yes

S204 | GIVE WARNING TO USER

END

**EP 3 588 305 A1**

## INTERNATIONAL SEARCH REPORT

| International application No. |
|---|
| PCT/JP2018/014479 |

**A. CLASSIFICATION OF SUBJECT MATTER**
Int. Cl. G06F12/00(2006.01)i, G06F11/20(2006.01)i

According to International Patent Classification (IPC) or to both national classification and IPC

**B. FIELDS SEARCHED**

Minimum documentation searched (classification system followed by classification symbols)
Int. Cl. G06F12/00, G06F11/20

Documentation searched other than minimum documentation to the extent that such documents are included in the fields searched
Published examined utility model applications of Japan     1922-1996
Published unexamined utility model applications of Japan   1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-63582 A (JATCO LTD.) 06 March 1998, | 1-5, 7-9 |
| A | paragraphs [0028]-[0033], fig. 4, 5 (Family: none) | 6 |
| X | JP 6-19800 A (SHARP CORP.) 28 January 1994, | 1-5, 7-9 |
| A | paragraphs [0009]-[0013], fig. 2, 3 (Family: none) | 6 |
| X | JP 58-215794 A (TOKYO SHIBAURA ELECTRIC CO., LTD.) | 1-5, 7-9 |
| A | 15 December 1983, page 3, upper left column, line 12 to lower right column, line 7, fig. 2 (Family: none) | 6 |

☐ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.05.2018 | 22.05.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

**Patent documents cited in the description**

- JP 4301301 B